# EUROPÄISCHE PATENTSCHRIFT

(11) **EP 1 741 629 B1**
(45) Veröffentlichungstag und Bekanntmachung des Hinweises auf die Patenterteilung: **26.03.2008**
(21) Anmeldenummer: 06006206.4
(22) Anmeldetag: 25.03.2006
(51) Int. Cl.: B65B 7/16, B65B 51/16, B29C 65/18

(54) **Vorrichtung zum Siegeln einer Näpfe aufweisenden Formfolie mit einer Deckfolie**
Device for sealing a shaped foil having drawn cups by applying a cover foil
Dispositif pour sceller une feuille profilée ayant des alvéoles par l'application d'une feuille de couverture

(30) Priorität: 09.07.2005 DE 102005032177
(43) Veröffentlichungstag der Anmeldung: 10.01.2007
(73) Patentinhaber: UHLMANN PAC-SYSTEME GmbH & Co. KG, 88471 Laupheim (DE)
(72) Erfinder: Gertitschke, Dipl.-Ing. Detlev, 88471 Laupheim (DE); Matzenmüller, Jürgen, 88416 Bellamont (DE)
(74) Vertreter: Hentrich, Swen

(56) Entgegenhaltungen:
- DE-B3- 10 347 777
- DE-B3-2102004 010 20

## Beschreibung

Die Erfindung betrifft eine Vorrichtung zum Siegeln einer, vorzugsweise befüllte, Näpfe aufweisenden Formfolie mit einer Deckfolie, mit einer mittels eines Walzenantriebes antreibbare, in ihrer Umfangsfläche Vertiefungen für die Näpfe aufweisenden Gegenwalze und einer darauf ablaufenden Siegelwalze, zwischen denen hindurch die Formfolie und die Deckfolie durchführbar sind, und mit einem der Formfolie als Teil eines Regelsystems zur Erfassung der Lage mindestens eines Napfes zugeordneten Sensor.

Eine derartige Vorrichtung ist aus der DE 10 2004 010 202 B3 bekannt, die zum kontinuierlichen Siegeln der Formfolie eingesetzt wird unter der Rahmenbedingung, dass eine strenge Korrelation der Lage der Näpfe in der Formfolie mit den Vertiefungen in der Oberfläche der Gegenwalze erzielt wird. Die Vorrichtung gemäß der DE 10 2004 010 202 B3 nutzt dazu das lagerichtige Synchronisieren der rotierend bewegten Gegenwalze auf die kontinuierlich durchlaufende Formfolie, wobei die richtige Anordnung der Lage der Vertiefungen in der Gegenwalze relativ zu den Näpfen der durchlaufenden Formfolie durch eine Anpassung des Umfanges der zweiteilig ausgebildeten Gegenwalze erzielt wird. Diese Vorrichtung hat sich in der Praxis bei den Anwendungsfällen gut bewährt, für die die Vorrichtung ausgelegt ist, jedoch besteht nicht die Möglichkeit, bis zu einem Maß von 1% geschrumpfte Formfolie mit dieser Vorrichtung verarbeiten zu können.

Der Erfindung liegt daher die Aufgabe zugrunde, eine Vorrichtung der eingangs genanntnen Art so auszubilden, dass eine bis zu 1% geschrumpfte Formfolie störungsfrei verarbeitet werden kann.

Diese Aufgabe wird nach der Erfindung bei einer Vorrichtung der eingangs genannten Art dadurch gelöst, dass im Umfang der Gegenwalze eine parallel zur Achse der Gegenwalze orientierte Zone der Oberfläche mit einem gegenüber der komplementären Umfangsfläche verminderten Reibwert angeordnet ist.

Diese Vorrichtung bietet den Vorteil, dass bei jeder Umdrehung der Gegenwalze zu einem bestimmten Zeitpunkt, nämlich der sogenannten "12-Uhr-Position", die Zone der Formfolie anliegt und damit zwischen der Formfolie und der Gegenwalze eine verminderte Reibung wirkt, die es ermöglicht, vereinfacht die Formfolie und die Gegenwalze relativ zueinander zu verstellen, was beispielsweise auch durch eine Regelung der Zugkräfte in dem Strang der Formfolie erfolgen kann. Durch die Erfindung werden insbesondere auch die Nachteile vermieden, die bei einer Regelung der Zugkräfte insbesondere dann auftreten, wenn die Bremskraft zur Lageregelung in einem großen Abstand eingeleitet wird und somit ein hoher Anteil elastischer Verformung der Formfolie bewirkt wird, die dem Ziel der lagerichtigen Synchronisierung der Näpfe mit den Vertiefungen entgegen wirkt. Die gemäß der Erfindung vorgesehene Anordnung einer Zone mit vermindertem Reibwert in der Umfangsfläche der Gegenwalze vermeidet weiterhin auch des Erfordernis einer Reduzierung der Siegelkraft, um den erwünschten Schlupf der Formfolie gegenüber der Gegenwalze erreichen zu können.

Ganz besonders bevorzugt ist es im Rahmen der Erfindung, wenn die Zone mehrfach, gleichmäßig über den Umfang verteilt vorgesehen ist und Abschnitte der komplementären Umfangsfläche gleicher Länge in Umfangsrichtung trennt. Durch die Präsenz mehrerer Zonen in der Umfangsfläche der Gegenwalze besteht sehr viel häufiger die Möglichkeit, eine Korrektur der Lage der Vertiefungen gegenüber den Näpfen der Formfolie vorzusehen, da häufiger eine der Zone sich in der 12-Uhr-Position befindet.

Vorgesehen ist weiterhin, dass in den Abschnitten die Vertiefungen ausgebildet sind, also der verminderte Reibwert nicht wirksam sind gegeben ist, wenn die Siegelung der Formfolie mit der Deckfolie erfolgt.

Diesem Ziel dient auch, dass die Breite jedes Abschnitts in Umfangsrichtung der Breite der aus dem mit der Deckfolie gesiegelten Formfolie auszustanzenden Blisterpackung entspricht, also während der Siegelung der einer Blisterpackung entsprechenden Fläche ein konstanter Reibwert gegeben ist und vorzugsweise erst nach dem Siegeln einer vollständigen Blisterpackung die erneute Korrektur der Lage der Näpfe relativ zu den Vertiefungen erfolgt.

Vorgesehen im Rahmen der Erfindung ist weiterhin, dass parallel zur Achse der Gegenwalze für jede Zone eine Nut in der Umfangsfläche ausgebildet ist, in der ein Einsatz angeordnet ist, dessen Oberfläche die Zone bildet. Bei dieser Gestaltung besteht die Möglichkeit, durch die Wahl eines geeigneten Einsatzes den sich ergebenden Reibwert optimal auf das Material der zu verarbeitenden Formfolie einzustellen. Eine Eignung für die Verwendung mit einer großen Anzahl unterschliedlicher Materialen von Formfolien ergibt sich, wenn der Einsatz aus Polytetrafluorethylen (PTFE) gebildet ist.

Eine gesteigerte Variabilität des Einsatzes der erfindungsgemäßen Vorrichtung ergibt sich, wenn der Einsatz auswechselbar in der Nut angeordnet ist, also nicht stets die komplette Gegenwalze getauscht werden muss, wenn eine Optimierung des Reibwertes erfolgen soll, da dazu lediglich der entsprechende Austausch des Einsatzes erforderlich ist.

Alternativ neben der Verwendung des Einsatzes besteht auch die Möglichkeit, dass in der Zone eine Beschichtung mit dem geringeren Reibwert auf der Oberfläche der Gegenwalze aufgebracht ist, wobei rein prinzipiell natürlich auch die Möglichkeit besteht, auf der Oberfläche des Einsatzes eine entsprechende Beschichtung anzuordnen.

Eine weitere bevorzugte Ausführungsform der Erfindung ist dadurch gekennzeichnet, dass zur Einleitung einer Zugkraft in die Formfolie ein Zugorgan benachbart zur Gegenwalze angeordnet ist. Bei dieser Gestaltung ergibt sich insbesondere der Vorteil, dass aufgrund der nah benachbarten Anordnung des Zugorgangs zur Gegenwalze die Länge der Formfolie zwischen dem Zugorgan und der Gegenwalze eng begrenzt ist und damit auch die elastische Verformung der Formfolie bei der Einleitung der Zugkraft minimiert ist. Als günstig hat es sich erwiesen, wenn das Zugorgan durch ein Walzenpaar oder ein Plattenpaar gebildet ist.

Im folgenden wird die Erfindung an einem in der Zeichnung dargestellten Ausführungsbeispiel näher erläutert; es zeigen:

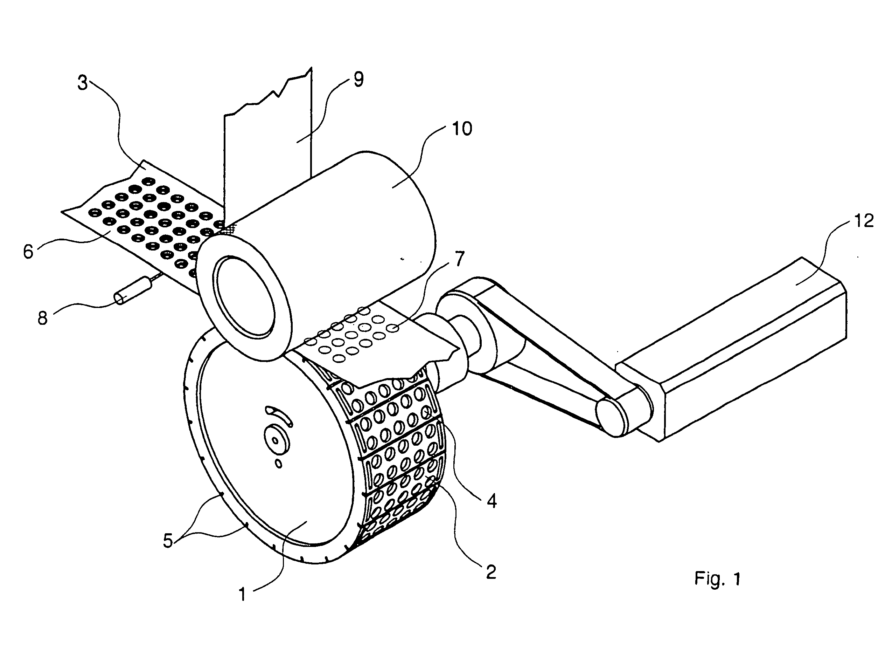

- Fig. 1: eine schematische, perspektivische Darstellung der erfindungsgemäßen Vorrichtung, und
- Fig. 2: in einer Seitenansicht eine vergrößerte Darstellung eines Ausschnitts der Siegelwalze und der Gegenwalze mit den in deren Umfangsfläche angeordneten Zonen.

In der Zeichnung ist eine Vorrichtung gezeigt, die zum Siegeln einer Formfolie 3 mit einer Deckfolie 9 dient, wobei in der Formfolie 3 mit Produkten gefüllte Näpfe 6 ausgebildet sind, die durch die Deckfolie 9 verschlossen werden. Die Vorrichtung besitzt eine mittels eines Walzenantriebes 12 antreibbare, in ihrer Umfangsfläche Vertiefungen für die Näpfe 6 aufweisende Gegenwalze 1 und eine darauf ablaufende Siegelwalze 10. Zwischen der Gegenwalze 1 und der Siegelwalze 10 hindurch sind die Formfolien 3 und die Deckfolie 9 durchgeführt, wobei die Formfolie 3 horizontal geführt ist, um ein ergonomisches Einführen zu ermöglichen. Weiterhin vermeidet die horizontale Führung im Bereich der Siegelung eine Krümmung, die zu Beschädigungen führen kann.

Der Formfolie 3 ist ein Sensor 8 als Teil eines Regelsystem zur Erfassung der Lage mindestens eines Napfes 6 zugeordnet, um sicher stellen zu können, dass die Näpfe 6 stets mittig in die Vertiefungen 4 eingreifen und so Beschädigungen der Näpfe 6 durch den Rand der Vertiefungen 4 vermieden werden. Wird durch den Sensor 8 eine Abweichung der Lage des Napfes 6 in der Formfolie 3 von dem erwartenden Sollwert festgestellt, wird mittels eines Zugorgans eine Zugkraft in die Formfolie 3 eingeleitet, wobei das Zugorgan benachbart zur Gegenwalze 1 angeordnet ist. Dieses Zugorgan ist zur besseren Übersicht in der Zeichnung nicht dargestellt und kann beispielsweise durch ein Walzenpaar oder ein Plattenpaar gebildet sein.

Um ohne eine Verminderung der Siegelkraft zur Korrektur der Lage der Näpfe 6 relativ zu den Vertiefungen 4 den Schlupf der Formfolie 3 gegenüber der Gegenwalze 1 bewirken zu können, ist im Umfang der Gegenwalze 1 eine parallel zur Achse der Gegenwalze 1 orientierte Zone 5 mit einem gegenüber der komplementären Umfangsfläche verminderten Reibwert angeordnet, die bei dem in der Zeichnung dargestellten Ausführungsbeispiel mehrfach vorhanden ist in einer gleichmäßig über den Umfang verteilten Anordnung, wodurch Abschnitte 2 der komplementären Umfangsfläche gleicher Länge in Umfangsrichtung getrennt werden, in denen die Vertiefungen 4 ausgebildet sind. Die Breite jedes Abschnitts 2 in Umfangsrichtung entspricht der Breite der aus der mit der Deckfolie 9 gesiegelten Formfolie 3 auszustanzenden Blisterpackung 7.

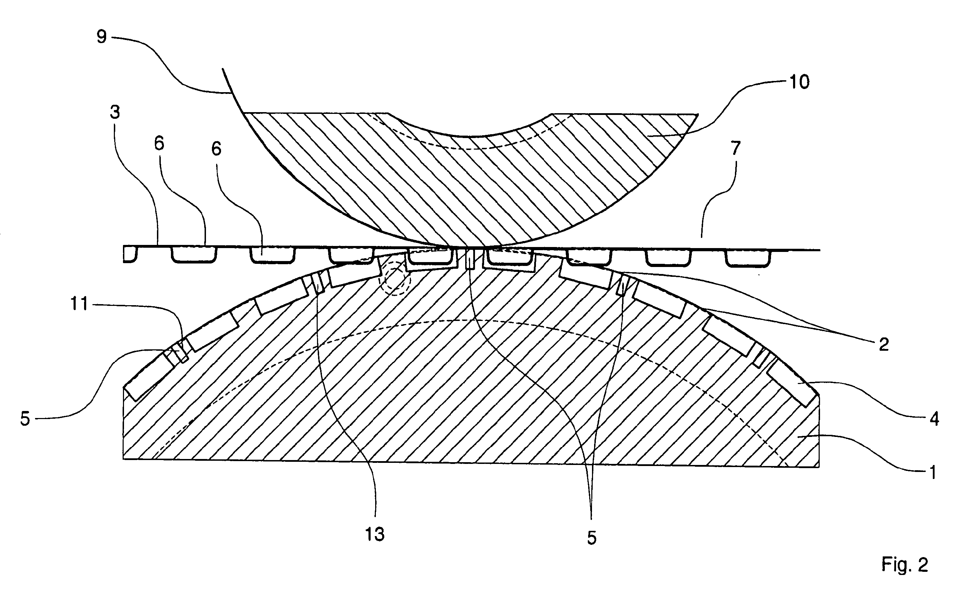

Fig. 2 läßt erkennen, dass sich eine der Zonen 5 in der sogenannten 12-Uhr-Position befindet, also diese Zone 5 die Fläche bildet, die zusammen mit der Siegelwalze 10 auf die Formfolie 3 und die Deckfolie 9 einwirkt.

Fig. 2 zeigt auch, dass parallel zur Achse der Gegenwalze 1 für jede Zone 5 eine Nut 11 in der Umfangsfläche ausgebildet ist, in der ein Einsatz 13 angeordnet ist, dessen Oberfläche die Zone 5 bildet. Als besonders geeignetes Material für den Einsatz 13 hat sich Polytetrafluorenthylen (PTFE) erwiesen, wobei selbstverständlich auch die Möglichkeit besteht, dass der Einsatz 13 auswechselbar in der Nut 11 angeordnet ist, um eine geeignete Wahl des Materials des Einsatzes 13 für die zu verarbeitende Formfolie zu ermöglichen.

## Patentansprüche

1. Vorrichtung zum Siegeln einer, vorzugsweise befüllte, Näpfe (6) aufweisenden Formfolie (3) mit einer Deckfolie (9), mit einer mittels eines Walzenantriebes (12) antreibbaren, in ihrer Umfangsfläche Vertiefungen (4) für die Näpfe (6) aufweisenden Gegenwalze (1) und einer darauf ablaufenden Siegelwalze (10), zwischen denen hindurch die Formfolie (3) und die Deckfolie (9) durchführbar sind, und mit einem der Formfolie (3) als Teil eines Regelsystems zur Erfassung der Lage mindestens eines Napfes (6) zugeordneten Sensor (8), **dadurch gekennzeichnet, daß** im Umfang der Gegenwalze (1) eine parallel zur Achse der Gegenwalze (1) orientierte Zone (5) der Oberfläche mit einem gegenüber der komplementären Umfangsfläche verminderten Reibwert angeordnet ist.

2. Vorrichtung nach Anspruch 1, **dadurch gekennzeichnet, daß** die Zone (5) mehrfach, gleichmäßig über den Umfang verteilt vorgesehen ist und Abschnitte (2) der komplementären Umfangsfläche gleicher Länge in Umfangsrichtung trennt.

3. Vorrichtung nach Anspruch 2, **dadurch gekennzeichnet, daß** in den Abschnitten (2) die Vertiefungen (4) ausgebildet sind.

4. Vorrichtung nach Anspruch 3, **dadurch gekennzeichnet, daß** die Breite jedes Abschnitts (2) in Umfangsrichtung der Breite der aus der mit der Deckfolie (9) gesiegelten Formfolie (3) auszustanzenden Blisterpackung (7) entspricht.

5. Vorrichtung nach einem der Ansprüche 1 bis 4, **dadurch gekennzeichnet, daß** parallel zur Achse der Gegenwalze (1) für jede Zone (5) eine Nut (11) in der Umfangsfläche ausgebildet ist, in der ein Einsatz (13) angeordnet ist, dessen Oberfläche die Zone bildet.

6. Vorrichtung nach Anspruch 5, **dadurch gekennzeichnet, daß** der Einsatz (13) aus Polytetrafluorethylen (PTFE) gebildet ist.

7. Vorrichtung nach Anspruch 5 oder 6, **dadurch gekennzeichnet, daß** der Einsatz (13) auswechselbar in der Nut (11) angeordnet ist.

8. Vorrichtung nach einem der Ansprüche 1 bis 7, **dadurch gekennzeichnet, daß** in der Zone (5) eine Beschichtung mit dem geringeren Reibwert auf der Oberfläche der Gegenwalze (1) aufgebracht ist.

9. Vorrichtung nach einem der Ansprüche 1 bis 8, **dadurch gekennzeichnet, daß** zur Einleitung einer Zugkraft in die Formfolie ein Zugorgan benachbart zur Gegenwalze (1) angeordnet ist.

10. Vorrichtung nach Anspruch 9, **dadurch gekennzeichnet, daß** das Zugorgan durch ein Walzenpaar oder ein Plattenpaar gebildet ist.

## Claims

1. A device for sealing a film (3) having, and preferably filled with, moulded cups (6) to a cover film (9), using a mating roll (1) comprising recesses (4) on its peripheral surface to accept the cups (6) whereby the mating roll (1) can be driven by a roller drive (12), whereby the device also has a sealing roll (10) running on the mating roll (1), between which the cupped film (3) and the cover film (9) can be guided, and with a sensor (8) associated with the cupped film (3) forming part of a control system to determine the position of at least one cup (6), **characterised in that** on the periphery of the mating roll (1) a zone (5) is arranged parallel to the axis of the mating roll (1), whereby the zone (5) has a reduced friction coefficient compared with the adjacent peripheral surface.

2. A device in accordance with claim 1, **characterised in that** the zone (5) is divided into many parts distributed uniformly around the periphery and separate sections (2) of the adjacent peripheral surfaces in equal lengths in the peripheral direction.

3. A device in accordance with claim 2, **characterised in that** the recesses (4) are formed in the sections (2).

4. A device in accordance with claim 3, **characterised in that** the width of each section (2) corresponds with the width of the blister packaging (7) formed by rolling and sealing the cover film (9) to the cupped film (3).

5. A device in accordance with one of claims 1 to 4, **characterised in that** a groove (11) is formed in the peripheral surface for each zone (5) and parallel to the axis of the mating roll (1), whereby an insert (13) is arranged in the groove (11) and its upper surface forms the zone.

6. A device in accordance with claim 5, **characterised in that** the insert (13) is made from polytetrafluoroethylene (PTFE).

7. A device in accordance with claim 5 or 6, **characterised in that** the insert (13) in the groove (11) can be exchanged.

8. A device in accordance with one of claims 1 to 7, **characterised in that** a coating with a lower friction coefficient than that of the surface of the mating roll (1) is applied in the zone (5).

9. A device in accordance with one of claims 1 to 8, **characterised in that** an auxiliary device is arranged adjacent to the mating roll (1) to apply a tensile force to the cupped film.

10. A device in accordance with claim 9, **characterised in that** the auxiliary device comprises a pair of rolls or a pair of plates.

## Revendications

1. Dispositif pour sceller une feuille thermoformée (3) présentant des alvéoles (6), de préférence remplies, avec une feuille de recouvrement (9), comprenant un cylindre de contre-pression (1) pouvant être entraîné à l'aide d'un moyen d'entraînement de cylindre (12) et comportant des creux (4) pour les alvéoles (6) dans sa surface périphérique, et un cylindre de scellement (10) roulant sur ledit cylindre de contre-pression, cylindres entre lesquels la feuille thermoformée (3) et la feuille de recouvrement (9) peuvent passer, et comprenant un capteur (8) associé à la feuille thermoformée (3) et faisant partie d'un système de régulation pour détecter la position d'au moins une alvéole (6), **caractérisé par le fait que** dans le pourtour du cylindre de contre-pression (1), il est prévu une zone (5) de la surface qui est orientée parallèlement à l'axe du cylindre de contre-pression (1) et a un coefficient de frottement réduit par rapport à la surface périphérique complémentaire.

2. Dispositif selon la revendication 1, **caractérisé par le fait que** la zone (5) est prévue plusieurs fois, avec une répartition uniforme sur le pourtour, et sépare dans la direction périphérique des portions (2) de la surface périphérique complémentaire qui ont la même longueur.

3. Dispositif selon la revendication 2, **caractérisé par le fait que** les creux (4) sont façonnés dans les portions (2).

4. Dispositif selon la revendication 3, **caractérisé par le fait que** la largeur de chaque portion (2), dans la direction périphérique, correspond à la largeur de l'emballage thermoformé (7) devant être découpé dans la feuille thermoformée (3) scellée avec la feuille de recouvrement (9).

5. Dispositif selon une des revendications 1 à 4, **caractérisé par le fait que**, parallèlement à l'axe du cylindre de contre-pression (1), la surface périphérique comporte pour chaque zone (5) une rainure (11) dans laquelle est disposé un insert (13) dont la surface forme ladite zone.

6. Dispositif selon la revendication 5, **caractérisé par le fait que** l'insert (13) est en poly(tétrafluoroéthylène) (PTFE).

7. Dispositif selon la revendication 5 ou 6, **caractérisé par le fait que** l'insert (13) est monté avec possibilité de remplacement dans la rainure (11).

8. Dispositif selon une des revendications 1 à 7, **caractérisé par le fait que** dans la zone (5), un revêtement avec un coefficient de frottement plus faible est appliqué sur la surface du cylindre de contre-pression (1).

9. Dispositif selon une des revendications 1 à 8, **caractérisé par le fait que** pour exercer une force de traction sur la feuille thermoformée, un organe de traction est disposé à proximité du cylindre de contre-pression (1).

10. Dispositif selon la revendication 9, **caractérisé par le fait que** l'organe de traction est constitué d'une paire de cylindres ou d'une paire de plaques.
